# EUROPEAN PATENT SPECIFICATION

(11) **EP 0 587 206 B1**
(45) Date of publication and mention of the grant of the patent: **23.10.1996**
(21) Application number: 93202108.2
(22) Date of filing: 19.07.1993
(51) Int. Cl.: B60S 1/08

(54) **Energising apparatus for wiper motor**
Stromversorgungseinrichtung für Wischermotor
Dispositif d'alimentation en courant pour un moteur d'essui-glace

(30) Priority: 10.09.1992 US 942920
(43) Date of publication of application: 16.03.1994
(73) Proprietor: ITT AUTOMOTIVE ELECTRICAL SYSTEMS, INC., Auburn Hills, MI 48321 (US)
(72) Inventor: Tracht, Steven Lee, Brighton, Michigan 48116-9008 (US); Jones, Christopher Howard, Dayton, Ohio 45419 (US); Porter, Eugene Bryan, Beavercreek, Ohio 45434 (US); Ponziani, Richard Louis, Centerville, Ohio 45459 (US)
(74) Representative: Vaufrouard, John Charles

(56) References cited:
- DE-A- 2 832 411
- GB-A- 2 142 226
- US-A- 4 692 677
- US-A- 4 859 919

## Description

This invention relates to energising apparatus for a wiper motor of a vehicle window wiper system, for example to an electric motor driven wiper system which includes electric dynamic braking of the motor, high and low speed forward modes of motor operation and a reverse mode of motor operation.

In prior art wiper systems having typical dynamic brake features, a normally open dynamic brake shunt circuit is coupled between ground and a forward mode power brush, while a forward mode common brush is coupled to ground. During dynamic braking, the circuit providing power to drive the motor is opened and the shunt circuit is closed so that the motor's back electro motive force e.m.f. generated at the forward mode power brush as a result of motor rotation is shunted to ground, thus effectuating a quick stop of the motor due to the back e.m.f. counteracting the forward rotation of the motor. High current protection is commonly part of the dynamic brake shunt circuit to prevent motor and/or wiring damage should the shunt circuit close while the circuit providing power is still closed and the motor is running in a forward mode. A fusible link in the shunt circuit designed to burn open before motor and/or circuit damage can occur is a commonly employed type of high current protection.

In prior art systems having reverse mode of operation, such as is associated with a reverse-to-park depressed park feature, reversal of the motor is accomplished by switching motor brush polarity from that of a forward mode of operation. The forward mode common brush is taken from ground potential up to the power source potential and a forward mode power brush, normally at a high potential during forward mode operation, is coupled to ground via a reverse mode ground circuit. Mechanical protection is commonly employed in reverse mode of operation to prevent motor and/or wiring damage should a wiper blade become obstructed before reaching its park position. This type of mechanical protection is known in the art as a snow clutch and is effective to allow the motor armature to continue to rotate when the wiper blades are obstructed, thereby preventing stall of the motor and subsequent burnout of the motor windings or wiring due to high current therethrough.

A windshield wiper system for motor vehicles is known from the disclosure in US Patent 4,692,677 which includes an electric motor which drives at least one wiper during normal wiper operation, to and fro between two reversing positions within a wiping area. When the wiper system has been switched off by means of an operating switch, the wiper is moved to a concealed parking position outside the wiping area. Upon switching on of the wiper system and during normal operation the motor runs in one direction of rotation, but for moving the wipers into the parking position the motor runs in the other direction of rotation. A position switch is changed over by a switching member coupled with a rotating drive member of the electric motor. The position switch, after the operating switch has been switched off, releases a signal for reversing the polarity and in the parking position releases a signal for switching off the electric motor. So that the wiping cycle for entering the parking position begins in the first reversing position adjacent to the parking position and the wiper occupies the first reversing position in the dwell time interval of intermittent operation, the position switch is changed over independently of the direction of rotation of the electric motor and always in the same position of the drive member. This disclosure is thought to be the closest prior art to the present invention.

Prior art systems perform satisfactorily as designed but improvements can be made. For example, fusible links or the like placed in a dynamic brake shunt circuit are sacrificial high current protection in that they must be replaced each time one burns open. Dynamic braking is lost until repair is effectuated. Not uncommon is such a fusible link etched onto a circuit board which, should it burn open, necessitates replacement of the entire circuit board. This arrangement adds expense beyond that of the fusible link itself and inconvenience to a repair. A mechanical reverse to park snow clutch is subject to typical mechanical failure modes, increases mechanical complexity of the wiper system and has a weight penalty. High current protection which is non-sacrificial, is effective in various modes of motor operation and which reduces mechanical complexity and associated mass is therefore desirable.

The present invention seeks to provide improved energising apparatus for a wiper motor.

According to the invention, there is provided energising apparatus for a wiper motor of a vehicle wiper system, the motor including first and second brushes (L,C), the wiper system including a wiper movable to a park position, an outer position and an inner position intermediate the outer and park positions, the wiper being movable out of the park position and thereafter back and forth between the inner and outer positions when the motor is operated in a forward mode and being moved to the park position when the motor is operated in a reverse mode; the energising apparatus comprising a control switch operable between on and off states; an electric power source including first and second power terminals; first coupling means operable when either (A) the control switch is in the on state or (B) the wiper is at a position intermediate the inner and outer wipe positions to couple the first brush to the first power terminal and coupling the second brush to the second power terminal to cause the motor to operate in a forward mode, characterised in second coupling means operable when both (C) the control switch is in the off state and (D) the wiper is at the inner position to couple the first brush to the second power terminal through a positive thermal coefficient thermistor and the second brush to the second power terminal for a dynamic braking period to effect a dynamic braking of the motor during the dynamic braking period; and third coupling means responsive to the expiration of the dynamic braking period for coupling the first brush to the second power terminal through the positive thermal coefficient thermistor and the second brush to the first power terminal to cause the motor to operate in the reverse mode, the positive thermal coefficient thermistor being adapted repeatably to limit motor current during dynamic braking and the reverse mode of the motor.

It is possible with the invention to provide protection for the motor windings and associated wiring from potentially damaging high current conditions.

Preferably, there can be provided non-sacrificial high current motor winding and wiring protection which can be used in a combined dynamic brake shunt/reverse mode ground circuit. High current protection is preferably provided during dynamic braking, during forward mode motor operation in the event the dynamic brake shunt circuit closes and during reverse mode motor operation, such as is used to park the wipers in a depressed position. Non-sacrificial current limiting means may be provided to eliminate the need to replace a spent high current protection device and to eliminate the need for a mechanical snow clutch in a system properly designed to carry a stalling load prior to the current limiting device becoming effective.

In a preferred embodiment, there is provided by way of non-sacrificial high current protection a positive thermal coefficient (PTC) thermistor providing a low resistance path under normal current conditions and a high resistance path under abnormally high current conditions, thus limiting the current and providing protection for the motor and associated circuitry. A positive thermal coefficient thermistor reacts to heat generated by current therethrough in substantially a resistive step function such that when a sufficiently high current is encountered for a sufficient period the positive thermal coefficient thermistor assumes a high resistance. The positive thermal coefficient will continue to assume a high resistance until the voltage across it is removed; a trickle current therethrough is sufficient to latch the positive thermal coefficient thermistor in a high resistance state. With the voltage removed, a positive thermal coefficient thermistor independently reverts back to a low resistance , thus in effect resetting itself when it is appropriate to do so without user intervention. Since it is non-sacrificial, the positive thermal coefficient thermistor remains effective through successive trip/reset cycles to protect against high current conditions.

An embodiment of the present invention is described below, by way of illustration only, with reference to the accompanying drawings, in which:
Figure 1 is a schematic diagram of an embodiment of wiper system capable of various modes of operation;
Figure 2 shows an embodiment of control circuit for the wiper system of Figure 1.

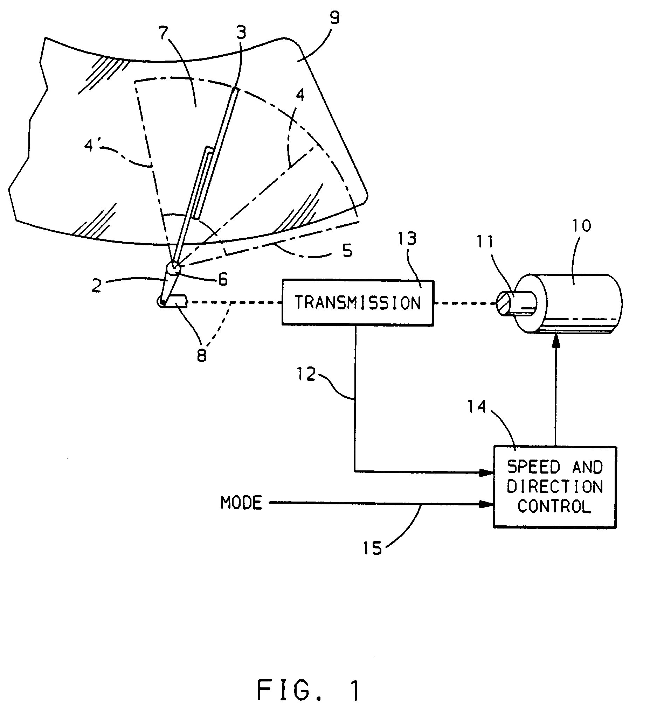

Referring to Figure 1, a vehicle windshield wiper system has a two-speed reversible DC motor 10 with an output shaft 11 imparting rotational motion to transmission components 13. A controller 14 controls speed, rotational motion (forward or reverse) and electric dynamic braking of motor 10 in dependence upon position inputs 12 from transmission components 13 and driver selected mode inputs 15. At least one wiper arm 2 is pivotally coupled at a point 6 between its ends to a vehicle body. Wiper blade 3 is fixed to one end of wiper arm 2 and is in contact with windshield 9. A wiper end of drive rod 8 is coupled to the other end of wiper arm 2.

Transmission components 13 comprise reduction gearing and mechanical linkage between output shaft 11 and the transmission end of drive rod 8 to translate forward rotational motion of motor 10 to reciprocating motion at the wiper end of drive rod 8. Reciprocating motion of drive rod 8 at the wiper end is thereby transferred to the wiper arm 2 to move wiper blade 3 back and forth between a direction reversing inner wipe position 4 and an outer wipe position 4' between a clearing area 7 on windshield 9. Depressed park position 5, typically low on windshield 9 and below the bonnet line of the vehicle so as to conceal the wiper blade when not in use, is adjacent the inner wipe position 4 and outside clearing area 7. Wiper blade 3 comes to rest at park position 5 when, in response to reverse rotational motion of motor 10, transmission components 13 increase the effective length of drive rod 8 to increase the travel of wiper blade 3 beyond inner wipe position 4. Wiper transmission components of this type embodying the aforementioned mechanical functions are known from US-A-4,798,102, US-A-4,924,726 and US-A-4,878,398.

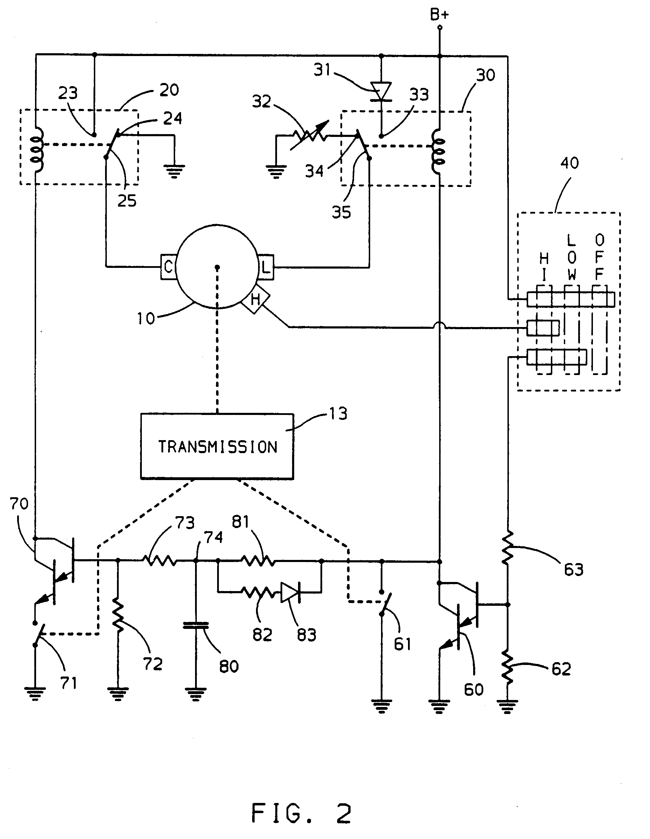

Position inputs 12 originate from park switch 71 and inner wipe switch 61 as illustrated in Figure 2. Park switch 71 is open when wiper blade 3 is in park position 5 and is closed when wiper blade 3 is out of park position 5. Inner wipe switch 61 closes just after wiper blade 3 leaves inner wipe position 4 to begin a wipe cycle, opens just prior to returning to inner wipe position 4 and is open during reverse motor operation and while wiper blade 3 is in park position 5. Park switch 71 and inner wipe switch 61 may be conventional contact plate/brush type switches or leaf spring/cam type switches. User selected mode inputs 15 are established by the position of conventional wiper system mode switch 40, as shown in Figure 2.

Motor 10 has low forward speed and high forward speed brushes, respectively designated L and H, and a forward common brush C. Modes of motor operation include low and high forward speeds, reverse for parking wiper blades and dynamic brake for minimising wiper blade coast and overshoot when the motor is switched off from a forward mode of operation. Motor 10 operates in a forward mode when one of the forward speed brushes L or H is at a high potential and common brush C is at a low potential. Typically, high potential is the vehicle system voltage, designated B+, and low potential is vehicle system ground. When voltage B+ is applied to low forward speed brush L to the exclusion of high forward speed brush H, motor 10 operates in a low forward speed. When voltage B+ is applied to high forward speed brush H to the exclusion of low forward speed brush L, motor 10 operates in a high forward speed. Motor 10 operates in a reverse mode when one of the forward speed brushes L or H is at ground and forward common brush C is at voltage B+, effectively reversing the polarity of the motor brushes from that during one of the forward speeds. High speed motor operation in reverse to park is not necessary or desirable for a controlled park; therefore, low forward speed brush L is the brush chosen to be at ground when forward common brush C is at voltage B+ so as to establish a low speed reverse mode of operation. Motor 10 operates in a dynamic brake mode when low forward speed brush L and common brush C are shorted together immediately after power is removed from motor 10. The shorting of low forward speed brush L and common brush C together is caused to occur through system ground.

In this embodiment, the modes of motor operation are established through two motor energising relays 20,30 and by the position of mode switch 40. Relays 20,30 are energised and deenergised in response to the driver selected position of mode switch 40 and positions of wiper blade 3, as indicated by park switch 71 and inner wipe switch 61. Both relays 20,30 are conventional single pole/double throw relays, each having a movable contact and first and second stationary contacts. When each respective relay is energised, its movable contact completes a circuit exclusively with the first stationary contact. When each respective relay is deenergised, its movable contact completes a circuit exclusively with the second stationary contact. The first stationary contact 23 of relay 20 is coupled to voltage B+, while the second stationary contact 24 of relay 20 is coupled to ground. The first stationary contact 33 of relay 30 is coupled to the cathode of diode 31, the anode of which is coupled to voltage B+. The second stationary contact 34 of relay 30 is coupled to ground in series with positive thermal coefficient thermistor 32. The movable contact 25 of relay 20 is coupled to forward common brush C, while the movable contact 35 of relay 30 is coupled to low forward speed brush L.

High forward speed brush H is coupled to voltage B+ through mode switch 40 when this switch is in the HIGH position, and is open through switch 40 when the switch is in any other position. Forward common brush C is coupled to voltage B+ when relay 20 is energised, and is coupled to ground when relay 20 is deenergised. Low forward speed brush L is coupled to the cathode of diode 31 when relay 30 is energised and is coupled to ground in series with positive thermal coefficient thermistor 32 when relay 30 is deenergised.

The various modes of motor operation and corresponding functions of positive thermal coefficient thermistor 32 are illustrated below assuming, initially, that mode switch 40 has been in the OFF position for a time sufficient for the wiper system to reach a steady state with wiper blade 3 in the depressed park position 5, with both relays 20,30 deenergised and park and inner wipe switches 71,61 open. When mode switch 40 is switched to a forward mode of operation, either LOW or HIGH, voltage B+ is supplied across series combination of resistors 63 and 62 to establish a biasing voltage therebetween coupled to the base the first stage of a first Darlington configured pair of transistors 60. Transistors 60, when biased on, supply a ground path to relay 30 energising this relay to couple low forward speed brush L to the cathode of diode 31. Transistors 60 also supply a ground path to discharge swiftly capacitor 80 (which is fully charged in the steady state OFF condition) through discharge resistor 82 and forward biased diode 83. If mode switch 40 is switched to the LOW position, diode 31 will be forward biased, power will be supplied to low forward speed brush L, high forward speed brush H will be open circuited and motor 10 will operate in a low forward speed mode. Alternatively, if mode switch 40 is switched to the HIGH position, power will be supplied to high forward speed brush H, diode 31 will be reverse biased by the back e.m.f. generated at low forward speed brush L by the high speed operation, thereby electrically open circuiting low forward speed brush L and motor 10 will operate in a high forward speed mode.

In either of the forward speed modes, wiper blade 3 moves out of park position 5 and park switch 71 closes. Shortly thereafter wiper blade 3 continues past inner wipe position 4 and inner wipe switch 61 closes to supply a ground path to relay 30, apparently functionally redundant with transistors 60. However, should mode switch 40 be switched to the OFF position while wiper blade 3 is in the middle of a cycle, the bias to transistors 60 would be lost but inner wipe switch 61 would continue to supply a ground path to relay 30 to allow the cycle to be completed. Also, for the short interval during a forward mode when inner wipe switch 61 is open just prior to reaching inner wipe position 4 until just after leaving inner wipe position 4, transistors 60 provide the ground path to relay 30 necessary for continued forward mode operation.

Therefore, at anytime when mode switch 40 is in the LOW or HIGH positions, a ground path to relay 30 is supplied either through transistors 60 or inner wipe switch 61. These ground paths also effectively force the base of the first stage of a second Darlington configured pair of transistors 70 to ground potential through resistors 73 and 72 resulting in transistors 70 being biased off to effectuate an open circuit ensuring a deenergised relay 20 throughout forward mode operation. Park switch 71 therefore has no effect during forward mode operation since it is operative in series with transistor pair 70.

Positive thermal coefficient thermistor 32 has no active function in any forward speed mode since relay 30 is energised and positive thermal coefficient thermistor 32 is open at stationary contact 34. If, however, low forward speed brush L becomes short circuited to the second stationary contact or associated wiring during a forward speed mode by way of a wiring short circuit or an internal short circuit of relay 30, the voltage at low speed brush L (whether system voltage B+ in LOW speed mode or the generated e.m.f. in HIGH speed mode) would source current through positive thermal coefficient thermistor 32 to ground. Positive thermal coefficient thermistor 32 would respond by assuming a high resistance, thereby limiting current therethrough and allowing motor 10 to continue forward speed operation while preventing damage to the windings and/or wiring of motor 10. After voltage is removed from across positive thermal coefficient thermistor 32, it will revert back to a low resistance state.

When, from either of the forward speed modes, mode switch 40 is moved to the OFF position, the current wipe cycle is allowed to continue by virtue of inner wipe switch 61. However, when wiper blade 3 reaches the point just prior to inner wipe position 4 where inner wipe switch 61 opens, relay 30 is deenergised and low forward speed brush L is coupled to ground through positive thermal coefficient thermistor 32. Forward common brush C continues to be coupled to ground because relay 20 remains deenergised since transistors 70 immediately remain biased off. The back e.m.f. then present at low forward speed brush L due to the continuing inertial rotation of the motor armature is shunted across low forward speed brush L and forward common brush C through ground. When both relays are in a deenergised state, dynamic braking occurs, whereby rotation of motor 10 is abruptly stopped with minimal coast of wiper blade 3, which comes to rest at inner wipe position 4 ready to move into park position 5. As this occurs, the relatively low resistance of the windings of motor 10 may pass a relatively high current for a short period until motor 10 stops. If this current is excessively high for a sufficient period, positive thermal coefficient thermistor 32 will take on a high resistance state and prevent damage by limiting current through the windings and associated wiring of motor 10. Positive thermal coefficient thermistor 32 would then revert back to a low resistance state when the voltage is removed.

Transistors 70 remain biased off during the dynamic braking of motor 10, initiated by the opening of inner wipe switch 61 and consequent removal of ground and deenergisation of relay 30. Shortly thereafter, transistors 70 will become biased on by a bias voltage established between resistors 73 and 72. When inner wipe switch 61 opens, resistor 73 is pulled up to a high potential at node 74 at a rate controlled by the RC time constant established by resistor 81 and capacitor 80. The charge time of capacitor 80 dictates how long after the opening of inner wipe switch 61 transistors 70 will be biased on, the RC time constant being chosen such that sufficient time is allowed for wiper blade 3 to come to rest at inner wipe position 4, ready to move into park position 5. Diode 83 prevents swift charge up of capacitor 80 through discharge resistor 82.

Transistors 70, when biased on, supply a ground path in series with a closed park switch 71 to relay 20, energising the same and thereby coupling forward common brush C to voltage B+. Motor 10 polarity is now reversed from that of low forward speed mode with forward common brush being coupled to voltage B+ and low forward speed brush L being coupled to ground through positive thermal coefficient thermistor 32. Motor 10 operates in a low speed reverse mode and transmission components 13 increase the effective length of drive rod 8 to move wiper blade 3 into park position 5. When park position 5 is reached, park switch 71 opens, deenergising relay 20 and causing forward common brush C to short to ground to cause dynamic braking of motor 10.

If during the reverse speed mode motor 10 stalls, for example when an obstruction prevents travel of wiper blade 3, current through the windings of motor 10 will increase. If the current becomes excessive for a sufficient period, positive thermal coefficient thermistor 32 will take on a high resistance state and limit the current passing through the windings and associated wiring of the motor to prevent damage thereto. Removal of the obstruction to park position 5 would not alone allow the positive thermal coefficient thermistor 32 to revert back to a low resistance. Rather, removal of the voltage across positive thermal coefficient thermistor 32 is required, such as is accomplished when the vehicle is turned off or a forward mode of operation is once again invoked. It is noted here that since positive thermal coefficient thermistor 32 is auto-resetting and not sacrificial, the dynamic braking shunt circuit is not lost.

Resistors 73 and 72 are chosen to be relatively large to minimise current passed therethrough when mode switch 40 is in the OFF position and a steady state has been reached. Discharge resistor 82 is chosen to be relatively small to ensure swift discharge of capacitor 80 through diode 83 when mode switch is switched from the OFF position to a forward speed mode. Quick discharge removes any bias voltage then present at transistors 70 so that relay 20 remains deenergised during early forward speed mode operation when park switch 71 closes upon wiper blade 3 leaving park position 5. Exemplary component values are listed in the table below.

| Component | Value |
|---|---|
| Resistor 62 | 24 Kohm |
| Resistor 63 | 24 Kohm |
| Resistor 72 | 100 Kohm |
| Resistor 73 | 100 Kohm |
| Resistor 81 | 20 Kohm |
| Resistor 82 | 360 ohm |
| Capacitor 80 | 33 µF |

Excessively high current with regard to the ability of the windings and associated wiring of the motor 10 to sustain current without risk of damage thereto will depend upon choice of motor 10 and wiring. Positive thermal coefficient thermistor 32 is chosen with regard to the particular motor 10 and wiring current capabilities, such that positive thermal coefficient thermistor 32 takes on a high resistance state before the motor 10 or wiring are caused to operate at their maximum current capacities for any significant period, thereby protecting the windings and wiring. The precise operating parameters of positive thermal coefficient thermistor 32 are critical to the particular motor 10 and wiring in so far as they must be chosen adequately to protect the motor 10 windings and wiring without tripping prematurely during normal dynamic brake and park modes.

While the above-described embodiment uses electromechanical relays to perform the switching functions, solid state relays and switches may be used instead.

## Claims

1. Energising apparatus for a wiper motor of a vehicle wiper system, the motor including first and second brushes (L,C), the wiper system including a wiper ( 3 ) movable to a park position ( 5 ), an outer position (4') and an inner position (4) intermediate the outer and park positions, the wiper (3 ) being movable out of the park position and thereafter back and forth between the inner and outer positions when the motor is operated in a forward mode and being moved to the park position when the motor is operated in a reverse mode; the energising apparatus comprising a control switch (40) operable between on and off states; an electric power source including first and second power terminals; first coupling means (35,25) operable when either (A) the control switch is in the on state or (B) the wiper is at a position intermediate the inner and outer wipe positions to couple the first brush to the first power terminal and coupling the second brush to the second power terminal to cause the motor to operate in a forward mode, characterised in second coupling means (35,61) operable when both (C) the control switch is in the off state and (D) the wiper is at the inner position to couple the first brush to the second power terminal through a positive thermal coefficient thermistor and the second brush to the second power terminal for a dynamic braking period to effect a dynamic braking of the motor during the dynamic braking period; and third coupling means (35,25) responsive to the expiration of the dynamic braking period for coupling the first brush to the second power terminal through the positive thermal coefficient thermistor and the second brush to the first power terminal to cause the motor to operate in the reverse mode, the positive thermal coefficient thermistor being adapted repeatably to limit motor current during dynamic braking and the reverse mode of the motor.

2. Energising apparatus according to claim 1, comprising a third brush (H), the control switch being operable between low speed, high speed and off states; the first coupling means being operable when either (A) the control switch is in the low speed state or (B) the control switch is in either the off or the low speed states and the wiper is intermediate the inner and outer wipe positions to couple the first brush to the first power terminal, the second brush to the second power terminal and to open circuit the third brush to cause the motor to operate at a low forward speed; the second coupling means being operable when both (C) the control switch is in the off state and (D) the wiper is at the inner position to couple the first brush to the second power terminal through the positive thermal coefficient thermistor, the second brush to the second power terminal and to open the third brush; the third coupling means being adapted to open circuit the third brush on expiration of the dynamic braking period; the apparatus comprising fourth coupling means (35,31,25) operable when the control switch is in the high speed state to open circuit the first brush and to couple the second brush to the second power terminal and the third brush to the first power terminal to cause the motor to operate at a high forward speed.

3. Energising apparatus according to claim 2, comprising first switch means (40) connected between the third brush and first terminal of the electric power source, second switch means (35,34) connected between the first brush and the second terminal of the electric power source in series with a positive thermal coefficient thermistor, third switch means (25,24) connected between the second brush and the second terminal of the electric power source and fourth switch means (25,23) connected between the second brush and the first terminal of the electric power source; wherein the fourth coupling means is formed by closing the first and third switches and opening the second and fourth switches, the second coupling means is formed by opening the first and fourth switches and closing the second and third switches, and the third coupling means is formed by closing the second and fourth switches and opening the first and third switches.

4. Energising apparatus according to claim 3, comprising a fifth switch (35,33) connected between the first brush and the first terminal of the electric power supply in series with a diode; wherein the first coupling means is formed by opening the first, second and fourth switches and closing the third and fifth switches, the fifth switch also being closed during operation of the fourth coupling means.

## Patentansprüche

1. Stromversorgungsvorrichtung für den Wischernotor einer Fahrzeugwischeranlage, wobei der Motor erste und zweite Bürsten (L, C) enthält und die Wischeranlage einen in eine Parkstellung (5), eine äußere Stellung (4') und eine zwischen der äußeren und der Parkstellung gelegene innere Stellung (4) beweglichen Wischarm (3) aufweist, wobei der Wischarm (3) in Vorwärts-Drehrichtung des Motors aus der Parkstellung und danach zwischen der inneren und der äußeren Stellung pendelnd bewegbar ist und in umgekehrter Drehrichtung des Motors in die Parkstellung bewegt wird, wobei die Stromversorgungsvorrichtung einen Steuerschalter (40) aufweist, der zwischen einer Ein- und einer AusPosition schaltbar ist, weiterhin eine Stromquelle mit ersten und zweiten Stromanschlüssen, erste Kontaktmittel (35,25), die betätigbar sind, wenn (A) der Steuerschalter sich in der Ein-Position befindet oder (B) der Wischarm eine zwischen der inneren und der äußeren Wischerstellung gelegene Zwischenstellung einnimmt, um die erste Bürste mit dem ersten Stromanschluß und die zweite Bürste mit dem zweiten Stromanschluß zu verbinden, damit der Motor im Vorwärtslauf arbeitet,
gekennzeichnet, durch zweite Kontaktmittel (35,61), die betätigbar sind, wenn (C) der Steuerschalter sich in der Aus-Position befindet und (D) der Wischarm die innere Stellung einnimmt, um die erste Bürste über einen Thermistor mit positivem thermischen Koeffizienten mit dem zweiten Stromanschluß und die zweite Bürste mit dem zweiten Stromanschluß während eines dynamischen Verzögerungszeitraums zur dynamischen Abbremsung des Motors während des dynamischen Verzögerungszeitraums zu verbinden, sowie durch dritte, vom Ablauf des dynamischen Verzögerungszeitraums abhängige Kontaktmittel (35,25), um die erste Bürste über den Thermistor mit positivem thermischen Koeffizienten mit dem zweiten Stromanschluß und die zweite Bürste mit dem ersten Stromanschluß zu verbinden, damit der Motor in umgekehrter Drehrichtung arbeitet, wobei der Thermistor mit positivem thermischen Koeffizienten während der dynamischen Abbremsung und dem Rückwärtslauf des Motors wiederholt den Motorstrom einschränken kann.

2. Stromversorgungsvorrichtung nach Anspruch 1, mit einer dritten Bürste (H), wobei der Steuerschalter zwischen Langsamlauf, Schnellauf und Aus-Positionen schaltbar ist, wobei die ersten Kontaktmittel schaltbar sind, wenn (A) der Steuerschalter die Langsamlaufstellung einnimmt oder (B) der Steuerschalter entweder die Aus-Position oder die Langsamlaufstellung einnimmt und der Wischarm sich zwischen der inneren und der äußeren Wischstellung befindet, um die erste Bürste mit dem ersten Stromanschluß und die zweite Bürste mit dem zweiten Stromanschluß zu verbinden und den Stromkreis der dritten Bürste zu öffnen, damit ein langsamer Vorwärtslauf des Motors bewirkt wird, wobei die zweiten Kontaktmittel schaltbar sind, wenn (C) der Steuerschalter sich in der Aus-Position befindet und (D) der Wischarm die innere Stellung einnimmt, um die erste Bürste über den Thermistor mit positivem thermischen Koeffizienten mit dem zweiten Stromanschluß und die zweite Bürste mit dem zweiten Stromanschluß zu verbinden und den Stromkreis der dritten Bürste zu öffnen, wobei die dritten Kontaktmittel bei Ablauf des dynamischen Verzögerungszeitraums den Stromkreis der dritten Bürste öffnen, wobei die Vorrichtung vierte Kontaktmittel (35,31,25) aufweist, die in der Schnellaufstellung des Steuerschalters betätigbar sind, um den Stromkreis der ersten Bürste zu öffnen und die zweite Bürste mit dem zweiten Stromanschluß und die dritte Bürste mit dem ersten Stromanschluß zu verbinden, damit ein schneller Vorwärtslauf des Motors bewirkt wird.

3. Stromversorgungsvorrichtung nach Anspruch 2, mit zwischen der dritten Bürste und dem ersten Stromanschluß der Stromquelle angeschlossenen ersten Schaltmitteln (40), mit zweiten Schaltmitteln (35,34), die zwischen der ersten Bürste und dem zweiten Stromanschluß der Stromquelle in Reihenschaltung mit einem Thermistor mit positivem thermischen Koeffizienten geschaltet sind, mit dritten Schaltmitteln (25,24), die zwischen der zweiten Bürste und dem zweiten Stromanschluß der Stromquelle geschaltet sind, und mit vierten Schaltmitteln (25,23), die zwischen der zweiten Bürste und dem ersten Stromanschluß der Stromquelle geschaltet sind, wobei die vierten Kontaktmittel durch Schließen des ersten und dritten Schalters und Öffnen des zweiten und vierten Schalters gebildet werden, und die zweiten Kontaktmittel durch Öffnen des ersten und vierten Schalters und Schließen des zweiten und dritten Schalters und die dritten Kontaktmittel durch Schließen des zweiten und vierten Schalters und Öffnen des ersten und dritten Schalters gebildet werden.

4. Stromversorgungsvorrichtung nach Anspruch 3, mit einem fünften Schalter (35,33), der zwischen der ersten Bürste und dem ersten Stromanschluß der Stromquelle in Reihenschaltung mit einer Diode geschaltet ist, wobei die ersten Kontaktmittel durch Öffnen des ersten, zweiten und vierten Schalters und Schließen des dritten und fünften Schalters gebildet werden, und wobei der fünfte Schalter auch während der Betätigung der vierten Kontaktmittel geschlossen ist.

## Revendications

1. Appareil de mise sous tension pour un moteur d'essuie-glace d'un système d'essuie-glace de véhicule, le moteur comportant des premier et deuxième balais (L, C), le système d'essuie-glace comportant un essuie-glace (3) mobile vers un emplacement de parcage (5), un emplacement extérieur (4') et un emplacement intérieur (4) entre les emplacements extérieur et de parcage, l'essuie-glace (3) étant mobile depuis l'emplacement de parcage et après cela en arrière et en avant entre les emplacements intérieur et extérieur quand le moteur est actionné en sens direct et étant mû vers l'emplacement de parcage quant le moteur est actionné en sens inverse ; l'appareil de mise sous tension comprenant un commutateur de commande (40) actionnable entre des états marche et arrêt ; une source d'énergie électrique comportant des première et deuxième bornes d'énergie ; des premiers moyens de liaison (35, 25) actionnables quand ou (A) le commutateur de commande est à l'état marche ou (B) l'essuie-glace est à un emplacement entre les emplacements d'essuyage intérieur et extérieur pour relier le premier balai à la première borne d'énergie et relier le deuxième balai à la deuxième borne d'énergie pour amener le moteur à fonctionner en sens direct, caractérisé en ce qu'il comporte des deuxièmes moyens de liaison (35, 61) actionnables quand à la fois (C) le commutateur de commande est à l'état arrêt et (D) l'essuie-glace est à son emplacement intérieur pour relier le premier balai à la deuxième borne d'énergie à travers une thermistance à coefficient de température positif et le deuxième balai à la deuxième borne d'énergie pendant une période de freinage dynamique pour effectuer un freinage dynamique du moteur durant la période de freinage dynamique ; et des troisièmes moyens de liaison (35, 25) sensibles à l'expiration de la période de freinage dynamique pour relier le premier balai à la deuxième borne d'énergie à travers la thermistance à coefficient de température positif et le deuxième balai à la première borne d'énergie pour amener le moteur à fonctionner en sens inverse, la thermistance à coefficient de température positif étant adaptée répétitivement à limiter le courant du moteur durant le freinage dynamique et le fonctionnement en sens inverse du moteur.

2. Appareil de mise sous tension selon la revendication 1, comprenant un troisième balai (H), le commutateur de commande étant actionnable entre des états faible vitesse, grande vitesse, et arrêt ; les premiers moyens de liaison étant actionnables quand ou (A) le commutateur de commande est à l'état faible vitesse ou (B) le commutateur de commande est aux états arrêt ou faible vitesse et l'essuie-glace est entre les emplacements d'essuyage intérieur et extérieur pour relier le premier balai à la première borne d'énergie, le deuxième balai à la deuxième borne d'énergie, et pour ouvrir le circuit du troisième balai pour amener le moteur à fonctionner à une faible vitesse en sens direct ; les deuxièmes moyens de liaison étant actionnables quand à la fois (C) le commutateur de commande est à l'état arrêt et (D) l'essuie-glace est à l'emplacement intérieur pour relier le premier balai à la deuxième borne d'énergie à travers la thermistance à coefficient de température positif, le deuxième balai à la deuxième borne d'énergie et pour ouvrir le troisième balai ; les troisièmes moyens de liaison étant adaptés à ouvrir le circuit du troisième balai lors de l'expiration de la période de freinage dynamique ; l'appareil comprenant des quatrièmes moyens de liaison (35, 31, 25) actionnables quant le commutateur de commande est à l'état grande vitesse pour ouvrir le circuit du premier balai et pour relier le deuxième balai à la deuxième borne d'énergie et le troisième balai à la première borne d'énergie pour amener le moteur à fonctionner en sens direct à grande vitesse.

3. Appareil de mise sous tension selon la revendication 2, comprenant des premiers moyens commutateurs (40) connectés entre le troisième balai et la première borne de la source d'énergie électrique, des deuxièmes moyens commutateurs (35, 34) connectés entre le premier balai et la deuxième borne de la source d'énergie électrique en série avec une thermistance à coefficient de température positif, des troisièmes moyens commutateurs (25, 24) connectés entre le deuxième balai et la deuxième borne de la source d'énergie électrique et des quatrièmes moyens commutateurs (25, 23) connectés entre le deuxième balai et la première borne de la source d'énergie électrique ; dans lequel les quatrièmes moyens de liaison sont formés par fermeture des premiers et troisièmes commutateurs et ouverture des deuxièmes et quatrièmes commutateurs, les deuxièmes moyens de liaison sont formés par ouverture des premiers et quatrièmes commutateurs et fermeture des deuxièmes et troisièmes commutateurs, et les troisièmes moyens de liaison sont formés par fermeture des deuxièmes et quatrièmes commutateurs et ouverture des premiers et troisièmes commutateurs.

4. Appareil de mise sous tension selon la revendication 3, comprenant un cinqième commutateur (35, 33) connecté entre le premier balai et la première borne de l'alimentation en énergie électrique en série avec une diode ; dans lequel les premiers moyens de liaison sont formés par ouverture des premiers, deuxièmes et quatrièmes commutateurs et fermeture des troisièmes et cinquièmes commutateurs, le cinquième commutateur étant également fermé durant le fonctionnement des quatrièmes moyens de liaison.
